# EUROPEAN PATENT SPECIFICATION

(11) **EP 3 367 807 B1**
(45) Date of publication and mention of the grant of the patent: **04.12.2019**
(21) Application number: 16795245.6
(22) Date of filing: 27.10.2016
(51) Int. Cl.: A23B 4/20, A23L 3/3472

(54) **COMPOSITIONS AND THEIR USE IN FOOD PRESERVATION**
ZUSAMMENSETZUNGEN UND DEREN VERWENDUNG IN DER LEBENSMITTELKONSERVIERUNG
COMPOSITIONS ET LEUR UTILISATION DANS LA CONSERVATION DES ALIMENTS

(30) Priority: 28.10.2015 EP 15191959
(43) Date of publication of application: 05.09.2018
(73) Proprietor: Indena S.p.A., 20139 Milano (IT)
(72) Inventor: MENEGHIN, Martino, 20139 Milano (IT); FRANCESCHI, Federico, 20139 Milano (IT); TOGNI, Stefano, 20139 Milano (IT); MALANDRINO, Salvatore, 20139 Milano (IT)
(74) Representative: Bianchetti Bracco Minoja S.r.l.
(86) International application number: PCT/EP2016/075977
(87) International publication number: WO 2017/072253

(56) References cited:
- WO-A1-2014/071438
- DE-U1-202011 105 533
- JP-A- 2006 188 442
- JP-B2- 2 991 855
- US-A1- 2003 224 071
- US-A1- 2007 259 081
- US-A1- 2009 110 789
- PERUMALLA A V S ET AL: "Green tea and grape seed extracts Potential applications in food safety and quality", FOOD RESEARCH INTERNATIONAL, ELSEVIER APPLIED SCIENCE, BARKING, GB, vol. 44, no. 4, 6 January 2011 (2011-01-06), pages 827-839, XP028202801, ISSN: 0963-9969, DOI: 10.1016/J.FOODRES.2011.01.022 [retrieved on 2011-01-14]
- ALMUDENA GARCA-RUIZ ET AL: "Antimicrobial phenolic extracts able to inhibit lactic acid bacteria growth and wine malolactic fermentation", FOOD CONTROL, BUTTERWORTH, LONDON, GB, vol. 28, no. 2, 1 May 2012 (2012-05-01), pages 212-219, XP028431676, ISSN: 0956-7135, DOI: 10.1016/J.FOODCONT.2012.05.002 [retrieved on 2012-05-21]

## Description

### Technical field of invention

The present invention relates to compositions comprising at least two extracts selected from oak extract, grape seed extract and green tea extract. Said compositions are useful in food preservation.

### State of the art

A form of deterioration of foods in general, and in particular of meat-based products, is due to lipid peroxidation, namely the oxidative degradation of lipids, also known as rancidification.

Said oxidative degradation processes are caused by the interaction between free reactive oxidative molecules (such as free radicals) and the lipids present in food. This triggers a chain reaction that leads to the oxidation process in fats. The use of antioxidants in products liable to lipid peroxidation allows this process to be interrupted or controlled. By stabilising free radicals, antioxidants stop or reduce the lipid peroxidation process.

The maintenance of an adequate cold chain during food preparation and preservation, together with vacuum packaging, reduces the speed of said processes, but does not stop them.

The addition of antioxidants to a substrate liable to oxidation is an effective method of interrupting or considerably reducing the lipid peroxidation process.

Synthetic and natural antioxidants are known.

Examples of synthetic antioxidants which can be added to meat-based products include butylated hydroxyanisole (BHA), butylated hydroxytoluene (BHT), tert-butylhydroquinone (TBHQ) and propyl gallate (PG). However, strict limits on the use of said antioxidants have been set by the legislation governing food additives; moreover, their safety is under discussion, as it appears that they may be carcinogenic, for example.

Natural antioxidants include some plant extracts, such as extracts of rosemary, sage and oregano, and polyphenols of various plant species. Although their origin is natural, this does not guarantee their safety.

Numerous studies have been conducted worldwide to find natural antioxidants which, if added to foods, especially meat, interrupt or reduce the lipid peroxidation processes, so that the foods last longer.

The use of natural antioxidants to improve food preservation and quality therefore remains desirable, and there is consequently a need to identify cheap sources of polyphenols which can be applied on an industrial scale.

In view of the factors set out above, there is still a need to identify alternative compositions of natural origin that effectively control the lipid peroxidation process for the preservation of foods liable to lipid peroxidation, especially meat-based products, sweet and savoury baked goods, and preserves.

### Summary of the invention

The present invention relates to preservative compositions comprising at least two extracts selected from oak extract, grape seed extract and green tea extract.

The invention also relates to the use of said compositions in food preservation.

### Description of the invention

The present invention relates to preservative compositions comprising at least two extracts selected from oak extract, grape seed extract and green tea extract, provided that when the at least two extracts are grape seed extract and green tea extract the compositions also comprise oak extract.

In particular, the compositions can include oak extract combined with grape seed extract or green tea extract, or grape seed extract combined with green tea extract and oak extract.

It has now surprisingly been found that compositions comprising two extracts selected from oak extract, grape seed extract and green tea extract are useful in the preservation of foods liable to lipid peroxidation, especially meat-based products. In particular, said combinations of extracts produce a synergistic effect in the control of the lipid peroxidation process in foodstuffs.

Oak (O) extract is preferably an extract characterised by a total polyphenol content equal to or greater than 65% w/w, and is more preferably a dried extract. According to the invention, the oak extract is obtained from bark.

The oak extract can be present (in the food to be preserved) in quantities ranging from 1 to 1000 mg/kg, preferably 10 to 200 mg/kg, and even more preferably amounts to 50 mg/kg.

Grape seed (GS) extract is preferably an extract characterised by a content equal to or greater than 95% w/w in total proanthocyanidins (calculated by the Folin method and expressed as catechins) and a monomer content (resulting from the sum of the catechin and epicatechin expressed as catechin) ranging between 5 and 15% w/w evaluated by the HPLC method, and is more preferably a dried extract.

The grape seed extract can be present (in the food to be preserved) in quantities ranging from 1 to 1000 mg/kg, preferably form 10 to 200 mg/kg, and even more preferably amounts to 50 mg/kg.

Green tea (GT) extract is preferably an extract characterised by a polyphenol content (calculated by the Folin method and expressed as catechins) equal to or greater than 45% w/w, and a catechin content (expressed as epicatechin-3-O-gallate), evaluated by the HPLC method, equal to or greater than 15% w/w, and is more preferably a dried extract.

According to a preferred aspect, the green tea extract can be obtained from the leaves.

The green tea extract can be present (in the food to be preserved) in quantities ranging from 1 to 1000 mg/kg, preferably from 10 to 200 mg/kg, and even more preferably amounts to 50 mg/kg.

All the extracts are commercially available or can be easily prepared by the skilled person using known techniques.

The present invention relates to compositions comprising at least two extracts selected from oak extract, grape seed extract and green tea extract, optionally mixed with at least one acceptable excipient and/or carrier.

A further object of the present invention is the use of preservative compositions comprising at least two extracts selected from oak extract, grape seed extract and green tea extract for the preservation of foods liable to lipid peroxidation, especially meat-based foods.

Preferably, the invention relates to the use of preservative compositions comprising oak extract combined with grape seed extract, or oak extract combined with green tea extract, or grape seed extract combined with green tea extract.

More preferably, the invention relates to the use of preservative compositions comprising oak extract combined with grape seed extract and/or green tea extract.

According to a further aspect, the meat-based foods to be preserved can be mincemeat, cured meats, hams and tinned meats; preferably ham, salami, sausages and tinned meat.

The combination of two extracts selected from oak extract, grape seed extract and green tea extract has proved to enhance the effects on the control of the lipid peroxidation process to which foods are liable, thus improving the preservation of said foods.

The compositions according to the invention can also be used for the preservation of sweet and savoury baked goods and preserves.

The following examples further illustrate the invention.

### Examples

The experimental examples relate to the evaluation of efficacy in food preservation.

### Evaluation method

To evaluate efficacy in the preservation of foods liable to lipid peroxidation, the thiobarbituric acid value is determined in food matrices.

The thiobarbituric acid value is a test frequently used to evaluate the secondary lipid oxidation level in a food.

Said method is based on the spectrophotometric measurement of a red chromophore, formed as a result of a TBA (*thiobarbituric acid*) reaction with the by-products of oxidation of the unsaturated fatty acids formed during the food breakdown process.

*Malondialdehyde* (MDA) is used as reference and calibration standard, and the test result is expressed in milligrams of MDA per Kg of product (food).

A 10 g portion of sample is dissolved in 30 ml of trichloroacetic acid (7.5%), homogenised with Ultraturrax and then filtered. Part of the filtrate (5 ml) is mixed with 5 ml of a 0.02M solution of TBA, and incubated at 100°C for 40 min. The readout of the absorbance at 532 nm against the blank is shown below; the reference calibration curve is prepared with solutions at different TEP (*tetraethoxypropane*) dilutions.

### Example 1 - Efficacy evaluation (comparative example)

The effect of oak extract on meat preservation was evaluated on the basis of MDA formation as lipid peroxidation index of fats. The results are set out below.

| Treatment mg/kg | Time | mgMDA/kg | Inhibition |
|---|---|---|---|
| None | T2 | 1.98±0.2 | - |
| | T8 | 6.43±0.2 | - |
| Oak extract 50 | T2 | 1.76±0.1 | 11.1 |
| | T8 | 4.17±0.2 | 35.14 |
| Oak extract 100 | T2 | 1.63±0.1 | 17.67 |
| | T8 | 3.85±0.2 | 40.12 |
| Oak extract 200 | T2 | 1.49±0.1 | 24.74 |
| | T8 | 3.09±0.2 | 51.9 |

### Example 2 - Efficacy evaluation (comparative example)

The effect of grape seed extract on meat preservation was evaluated on the basis of MDA formation as lipid peroxidation index of fats. The results are set out below.

| Treatment mg/kg | Time | mgMDA/kg | Inhibition |
|---|---|---|---|
| None | T2 | 2.10±0.1 | - |
| | T8 | 6.75±0.2 | - |
| Grape seed extract 50 | T2 | 1.83±0.1 | 12.85 |
| | T8 | 4.63±0.2 | 31.04 |
| Grape seed extract 100 | T2 | 1.78±0.1 | 15.23 |
| | T8 | 4.23±0.1 | 37.33 |
| Grape seed extract 200 | T2 | 1.54±0.2 | 26.66 |
| | T8 | 3.01±0.2 | 55.40 |

### Example 3 - Efficacy evaluation (comparative example)

The effect of green tea extract on meat preservation was evaluated on the basis of MDA formation as lipid peroxidation index of fats. The results are set out below.

| Treatment mg/kg | Time | mgMDA/kg | Inhibition |
|---|---|---|---|
| None | T2 | 2.21±0.2 | - |
| | T8 | 6.83±0.3 | - |
| Green tea extract 50 | T2 | 1.92±0.1 | 13.51 |
| | T8 | 4.56±0.2 | 33.23 |
| Green tea extract 100 | T2 | 1.81±0.1 | 18.09 |
| | T8 | 3.25±0.2 | 45.09 |
| Green tea extract 200 | T2 | 1.52±0.1 | 31.22 |
| | T8 | 3.01±0.2 | 55.28 |

### Example 4 - Efficacy evaluation

The effect of the combination of oak extract and grape seed extract (O/GS) according to the invention on meat preservation was evaluated on the basis of MDA formation as lipid peroxidation index of fats. The results are set out below.

| Treatment mg/kg | Time | mgMDA/kg | Inhibition |
|---|---|---|---|
| NONE | T2 | 2.45±0.1 | - |
| | T8 | 5.96±0.2 | - |
| O/GS extract 62.5 (50+1.25) | T2 | 1.65±0.2 | 32.65 |
| | T8 | 1.68±0.1 | 71.81 |
| O/GS extract 100 (50+50) | T2 | 1.04±0.2 | 57.55 |
| | T8 | 0.66±0.1 | 88.90 |
| O/GS extract 250 (50+200) | T2 | 0.71±0.1 | 71.02 |
| | T8 | 0.12±0.1 | 97.98 |

### Example 5 - Efficacy evaluation

The effect of the combination according to the invention of oak extract and green tea extract (O/GT) on meat preservation was evaluated on the basis of MDA formation as lipid peroxidation index of fats. The results are set out below.

| Treatment mg/kg | Time | mgMDA/kg | Inhibition |
|---|---|---|---|
| None | T2 | 2.21±0.2 | - |
| | T8 | 7.13±0.3 | - |
| O/GT extract 62.5 (50+1.25) | T2 | 1.53±0.1 | 30.77 |
| | T8 | 2.14±0.1 | 69.98 |
| O/GT extract 100 (50+50) | T2 | 1.03±0.1 | 53.40 |
| | T8 | 1.07±0.2 | 84.99 |
| O/GT extract 250 (50+200) | T2 | 0.61±0.1 | 72.52 |
| | T8 | 0.20±0.1 | 97.19 |

### Example 6 - Efficacy evaluation

The effect of the combination of green tea (GT) extract and grape seed (GS) extract according to the invention on meat preservation was evaluated on the basis of MDA formation as lipid peroxidation index of fats. The results are set out below.

| Treatment mg/kg | Time | mgMDA/kg | Inhibition |
|---|---|---|---|
| None | T2 | 2.16±0.1 | - |
| | T8 | 6.73±0.2 | - |
| GT/GS extract 62.5 (50+1.25) | T2 | 1.44±0.1 | 36.28 |
| | T8 | 1.80±0.2 | 73.64 |
| GT/GS extract 100 (50+50) | T2 | 1.08±0.2 | 50.00 |
| | T8 | 1.14±0.1 | 83.06 |
| GT/GS extract 250 (50+200) | T2 | 0.54±0.1 | 76.10 |
| | T8 | 0.32±0.1 | 95.24 |

As clearly demonstrated by examples 4-6 above reported, the effect obtainable by administering the compositions according to the invention is greater than the sum of the individual effects obtainable by administering the oak, grape seed and green tea extracts separately. In other words, the interaction between the individual active ingredients produces an evident synergistic effect.

## Claims

1. Preservative compositions comprising at least two extracts selected from:
- oak extract obtained from bark,
- grape seed extract,
- green tea extract,
provided that when the at least two extracts are grape seed extract and green tea extract the compositions also comprise oak extract.

2. Preservative compositions as claimed in claim 1, comprising oak extract combined with grape seed extract or green tea extract, or grape seed extract combined with green tea extract and oak extract.

3. Preservative compositions as claimed in claim 1 or 2, wherein the oak extract is **characterised by** a total polyphenol content equal to or greater than 65% w/w.

4. Preservative compositions as claimed in claims 1-3, wherein the grape seed extract is **characterised by** a total proanthocyanidin content (calculated by the Folin method and expressed as catechins) equal to or greater than 95% w/w, and a monomer content (resulting from the sum of catechin and epicatechin expressed as catechin) ranging between 5 and 15% w/w.

5. Preservative compositions as claimed in claims 1-4, wherein the green tea extract is **characterised by** a polyphenol content (expressed as catechins) equal to or greater than 45% w/w and a catechin content (expressed as epicatechin-3-O-gallate) equal to or greater than 15% w/w.

6. Preservative compositions as claimed in claims 1-5, wherein the oak extract ranges between 1 and 1000 mg/kg, preferably between 10 and 200 mg/kg, and even more preferably amounts to 50 mg/kg.

7. Preservative compositions as claimed in claims 1-6, wherein the grape seed extract ranges between 1 and 1000 mg/kg, preferably between 10 and 200 mg/kg, and even more preferably amounts to 50 mg/kg.

8. Preservative compositions as claimed in claims 1-7, wherein the green tea extract ranges between 1 and 1000 mg/kg, preferably between 10 and 200 mg/kg, and even more preferably amounts to 50 mg/kg.

9. Preservative compositions as claimed in claims 1-8, also comprising an acceptable excipient and/or carrier.

10. Use of preservative compositions comprising at least two extracts selected from:
- oak extract obtained from bark,
- grape seed extract,
- green tea extract,
for the preservation of foods liable to lipid peroxidation,
provided that when the at least two extracts are grape seed extract and green tea extract the compositions also comprise oak extract.

11. Use according to claim 10, wherein the compositions comprise oak extract combined with grape seed extract, or oak extract combined with green tea extract, or grape seed extract combined with green tea and oak extract.

12. Use according to claim 10 or 11, wherein the foods are meat-based.

13. Use according to in claim 10 or 11, wherein the meat-based foods are mincemeat, cured meats such as salami and sausages, ham and tinned meat.

14. Use according to in claim 10 or 11, wherein the foods are sweet and savoury baked goods and preserves.

## Patentansprüche

1. Konservierende Zusammensetzungen, umfassend mindestens zwei Extrakte, ausgewählt aus:
- Eichen-Extrakt, erhalten aus Rinde,
- Traubenkern-Extrakt,
- Extrakt aus grünem Tee,
mit der Maßgabe, dass, wenn die mindestens zwei Extrakte Traubenkern-Extrakt und Grüntee-Extrakt sind, die Zusammensetzungen auch Eichen-Extrakt umfassen.

2. Konservierende Zusammensetzungen nach Anspruch 1, umfassend Eichen-Extrakt in Kombination mit Traubenkern-Extrakt oder Grüntee-Extrakt, oder Traubenkern-Extrakt in Kombination mit Grüntee-Extrakt und Eichen-Extrakt.

3. Konservierende Zusammensetzungen nach Anspruch 1 oder 2, wobei der Eichen-Extrakt durch einen Gesamtpolyphenol-Gehalt von gleich oder mehr als 65 % Gew./Gew. gekennzeichnet ist.

4. Konservierende Zusammensetzungen nach Ansprüchen 1-3, wobei der Traubenkern-Extrakt durch einen Gesamtproanthocyanidin-Gehalt (berechnet nach dem Folin-Verfahren und ausgedrückt als Katechine) von gleich oder mehr als 95 % Gew./Gew. und einen Monomer-Gehalt (resultierend aus der Summe von Katechin und Epicatechin, ausgedrückt als Katechin) im Bereich von 5 bis 15 % Gew./Gew. gekennzeichnet ist.

5. Konservierende Zusammensetzungen nach Ansprüchen 1-4, wobei der Extrakt aus grünem Tee durch einen Polyphenol-Gehalt (ausgedrückt als Katechine) von gleich oder mehr als 45 % Gew./Gew. und einen Katechin-Gehalt (ausgedrückt als Epicatechin-3-O-gallat) von gleich oder mehr als 15 % Gew./Gew. gekennzeichnet ist.

6. Konservierende Zusammensetzungen nach Ansprüchen 1-5, wobei der Eichen-Extrakt zwischen 1 und 1000 mg/kg, vorzugsweise zwischen 10 und 200 mg/kg, liegt und noch bevorzugter Mengen von 50 mg/kg beträgt.

7. Konservierende Zusammensetzungen nach Ansprüchen 1-6, wobei der Traubenkern-Extrakt im Bereich zwischen 1 und 1000 mg/kg, vorzugsweise zwischen 10 und 200 mg/kg, liegt und noch bevorzugter Mengen von 50 mg/kg beträgt.

8. Konservierende Zusammensetzungen nach Ansprüchen 1-7, wobei der Extrakt aus grünem Tee im Bereich zwischen 1 und 1000 mg/kg, vorzugsweise zwischen 10 und 200 mg/kg, liegt und noch bevorzugter Mengen von 50 mg/kg beträgt.

9. Konservierende Zusammensetzungen nach Ansprüchen 1-8, auch umfassend einen verträglichen Exzipienten und/oder Träger.

10. Verwendung von konservierenden Zusammensetzungen, die mindestens zwei Extrakte umfassen, ausgewählt aus:
- Eichen-Extrakt, erhalten aus Rinde,
- Traubenkern-Extrakt,
- Extrakt aus grünem Tee,
zur Konservierung von Lebensmitteln, die einer Lipidperoxidation unterliegen,
mit der Maßgabe, dass, wenn die mindestens zwei Extrakte Traubenkern-Extrakt und Grüntee-Extrakt sind, die Zusammensetzungen auch Eichen-Extrakt umfassen.

11. Verwendung nach Anspruch 10, wobei die Zusammensetzungen Eichen-Extrakt kombiniert mit Traubenkern-Extrakt, oder Eichen-Extrakt kombiniert mit Grüntee-Extrakt, oder Traubenkern-Extrakt kombiniert mit grünem Tee- und Eichen-Extrakt umfassen.

12. Verwendung nach Anspruch 10 oder 11, wobei die Lebensmittel auf Fleischbasis sind.

13. Verwendung nach Anspruch 10 oder 11, wobei die Lebensmittel auf Fleischbasis Hackfleisch, Wurstwaren wie Salami und Würstchen, Schinken und Dosenfleisch sind.

14. Verwendung nach Anspruch 10 oder 11, wobei die Lebensmittel süße und herzhafte Backwaren und Konserven sind.

## Revendications

1. Compositions conservatrices comprenant au moins deux extraits sélectionnés parmi :
- l'extrait de chêne obtenu à partir de l'écorce,
- l'extrait de pépins de raisin,
- l'extrait de thé vert,
à condition que lorsque lesdits deux extraits sont l'extrait de pépins de raisin et l'extrait de thé vert les compositions comprennent également de l'extrait de chêne.

2. Compositions conservatrices telles que revendiquées selon la revendication 1, comprenant de l'extrait de chêne associé à de l'extrait de pépins de raisin ou de l'extrait de thé vert, ou de l'extrait de pépins de raisin associé à de l'extrait de thé vert et de l'extrait de chêne.

3. Compositions conservatrices telles que revendiquées selon la revendication 1 ou 2, l'extrait de chêne étant **caractérisé par** une teneur totale en polyphénol supérieure ou égale à 65 % en pds/pds.

4. Compositions conservatrices telles que revendiquées selon les revendications 1 à 3, l'extrait de pépins de raisin étant **caractérisé par** une teneur totale en proanthocyanidine (calculée selon le procédé de Folin et exprimée en catéchines) supérieure ou égale à 95 % en pds/pds, et une teneur en monomères (résultant de la somme de la catéchine et de l'épicatéchine exprimée en catéchine) s'étendant entre 5 et 15 % en pds/pds.

5. Compositions conservatrices telles que revendiquées selon les revendications 1 à 4, l'extrait de thé vert étant **caractérisé par** une teneur en polyphénol (exprimée en catéchines) supérieure ou égale à 45 % en pds/pds et une teneur en catéchine (exprimée en épicatéchine-3-O-gallate) supérieure ou égale à 15 % en pds/pds.

6. Compositions conservatrices telles que revendiquées selon les revendications 1 à 5, l'extrait de chêne s'étendant entre 1 et 1 000 mg/kg, préférablement entre 10 et 200 mg/kg, et même plus préférablement s'élevant jusqu'à 50 mg/kg.

7. Compositions conservatrices telles que revendiquées selon les revendications 1 à 6, l'extrait de pépins de raisin s'étendant entre 1 et 1 000 mg/kg, préférablement entre 10 et 200 mg/kg, et même plus préférablement s'élevant jusqu'à 50 mg/kg.

8. Compositions conservatrices telles que revendiquées selon les revendications 1 à 7, l'extrait de thé vert s'étendant entre 1 et 1 000 mg/kg, préférablement entre 10 et 200 mg/kg, et même plus préférablement s'élevant jusqu'à 50 mg/kg.

9. Compositions conservatrices telles que revendiquées selon les revendications 1 à 8, comprenant également un excipient et/ou un support acceptable.

10. Utilisation des compositions conservatrices comprenant au moins deux extraits sélectionnés parmi :
- l'extrait de chêne obtenu à partir de l'écorce,
- l'extrait de pépins de raisin,
- l'extrait de thé vert,
pour la conservation des aliments susceptibles de peroxydation des lipides,
à condition que lorsque lesdits deux extraits sont l'extrait de pépins de raisin et l'extrait de thé vert les compositions comprennent également de l'extrait de chêne.

11. Utilisation selon la revendication 10, les compositions comprenant de l'extrait de chêne associé à de l'extrait de pépins de raisin, ou de l'extrait de chêne associé à de l'extrait de thé vert, ou de l'extrait de pépins de raisin associé à de l'extrait de thé vert et de chêne.

12. Utilisation selon la revendication 10 ou 11, les aliments étant à base de viande.

13. Utilisation selon la revendication 10 ou 11, les aliments à base de viande étant de la viande hachée, des viandes durcies telles que le salami et les saucisses, le jambon et la viande en conserve.

14. Utilisation selon la revendication 10 ou 11, les aliments étant des produits et des conserves cuites sucrés et aromatisés.
